# EUROPEAN PATENT SPECIFICATION

(11) **EP 0 699 630 B1**
(45) Date of publication and mention of the grant of the patent: **10.03.1999**
(21) Application number: 95202338.0
(22) Date of filing: 30.08.1995
(51) Int. Cl.: C02F 1/42, B01J 47/04

(54) **Process for removing chelated iron from aqueous solutions by means of ion exchange resins**
Verfahren zur Entfernung von chelatisiertem Eisen aus wässrigen Lösungen mit Ionenaustauscherharzen
Procédé pour enlever de fer chélaté de solutions aqueuses à l'aide des résines échangeuses d'ions

(30) Priority: 01.09.1994 GB 9417555
(43) Date of publication of application: 06.03.1996
(73) Proprietor: KODAK LIMITED, Harrow, Middlesex HA1 4TY (GB); EASTMAN KODAK COMPANY, Rochester, New York 14650-2201 (US)
(72) Inventor: Fyson, John Richard, c/o Kodak Ltd., Middlesex, HA1 4TY (GB)
(74) Representative: Mackett, Margaret Dawn

(56) References cited:
- DE-A- 1 901 043
- DE-B- 1 078 952
- DE-B- 1 290 495

## Description

This invention relates to a process for the removal of heavy metals from aqueous solution, more particularly to the removal of iron from wash water from photographic development processes.

### Background of the invention

In colour photography development it is necessary at an appropriate stage to remove the silver image, which if left behind would darken the dye image. Also it is necessary to remove unused silver halide because it darkens on exposure to light.

To remove the silver it has been previously proposed to convert it to silver halide with a suitable bleach such as potassium ferricyanide or ferric iron complexed with ethylene diamine tetraacetic acid acting in the presence of potassium bromide, for example. Potassium dichromate has also been described for use as a bleach.

The silver halide formed in the bleaching step together with the unused silver halide referred to above are removed by fixing using the well known reaction with ammonium or alkali metal thiosulphate.

It has also been previously proposed to bleach and fix in the same solution, and such solutions are known as bleach fixes or blixes. If the bleach fix can be used quickly, it can be made by simply combining ferricyanide and sodium thiosulphate. However this mixture quickly decomposes and it has therefore been previously proposed to use an iron chelate type of bleach fix in which the iron is present as a ferric iron complex combined with ethylene diamine tetraacetic acid (EDTA) or propylene diamine tetraacetic acid (PDTA).

Wash water from colour development processes may therefore contain iron, sometimes together with other heavy metals such as silver and chromium.

To remove iron it has been previously proposed to pass the solution through a bed of anion exchange resin. For example, US Patent No 3,931,004 describes a process for the removal of ferrocyanide and ferricyanide using a weakly basic anion exchange resin in the presence of ammonium and thiosulphate ions to improve the performance of the ion exchange resin after regeneration.

U.S. Patent No.4,159,930 describes a process for the removal of ferrocyanide and ferricyanide ions using as an anion exchange resin a cross linked polystyrene resin with quaternary ammonium functional groups, an epoxy amine, a polyacrylic or a polyfunctional amine phenolic resin.

DE-B-1290495 discloses in one embodiment the use of a mixed bed anionic and cationic ion exchange resin to remove cyanide and cyanide-containing complexes of metal, specifically copper, from the waste water of a copper-plating plant.

DE-A-1901043 describes the use of a mixed bed of a weakly acidic cationic and a weakly or medium strongly basic anionic exchange resin to remove free and complex metal cyanides from the waste water of a galvanisation plant.

DE-B-1078952 discloses a method of removal of free chromic acid or phosphoric acid and salts thereof from waste water by the use of a mixed bed ion exchange resin in a ration of 3:1 strongly basic anionic resin to strongly acidic cationic resin.

It has also been previously proposed to employ a cation exchange resin in a column following the anion exchange resin and to pass the effluent stream through the two columns.

### Problem to be solved by the invention

A problem with ion exchange resins is that, after a period of use, the resins lose their ability to absorb ions from solution and it is necessary to either regenerate the resins or to replace them with fresh resin. The length of the period for which the resins can be used depends on the capacity of the resins.

It is an object of the present invention to improve the capacity of a given volume of resin and thereby extend the length of its useful life before the need for regeneration or replacement.

### Summary of the invention

According to the present invention there is provided a process for the removal of iron from an aqueous solution from the wash water of a photographic development process which comprises passing the solution through a bed containing a mixture of a strongly basic anionic exchange resin and a strongly acidic cationic exchange resin, wherein the iron is present as a complex with a chelating agent.

### Advantageous effect of the invention

The capacity of the mixed bed of resins to remove iron is greater than the two resins separately and this means that the useful life of the bed before regeneration or replacement is longer.

### Brief Description of the Drawings

Fig 1 in the accomanying drawings shows the apparatus used for testing the capacity of the resins.
Fig 2 shows the results obtained for the cationic exchange resins used in Example 1
Fig 3 shows the results obtained for the anionic resins used in Example 1.
Fig 4 shows the results obtained for the mixed bed resins used in Example 1.
Fig 5 shows the results for a comparison of the resins used separately and as a mixed bed.
Fig 6 shows the apparatus for determining the capacity of two resins used in separate columns.
Fig 7 show the comparison of the take up of iron by two resins used in series in separate beds with the take up of iron of the two resins mixed together

### Detailed description of the invention

The process of the present invention is suitable for the removal from aqueous solution of complexed heavy metals i.e. metals in the form of a complex anion or cation, and in particular iron, from the wash water from photographic processes. The wash water from the photographic process may contain bleach-fix.

The iron may be complexed with a chelating agent, for example ethylene diamine tetraacetic acid (EDTA) or an amino acid type of chelating agent particularly one containing at least three ligands.

The wash water after treatment by the present invention can be recycled to the photographic process for further use.

Suitable conditions are: a temperature of preferably less than 60°C, more preferably in the range 15 to 40°C, flow rates of less than 20 bed volumes per hour, preferably from 1 to 10 bed volumes per hour.

Typical iron content in wash water from photographic proceses is up to 100 ppm (parts per million) and the wash water treated by the process of the present invention will normally contain less than 10 ppm.

The cationic resin used in the mixture can be of either strongly or weakly acidic classes of resin or can be a chelating resin. A strongly acidic resin is preferred more preferably in the H⁺ form although the Na⁺ form can also be used.

The anionic resin can be of either the strongly or weakly basic classes, however a strongly basic resin is preferred more preferably in the OH⁻ form although the C1⁻ and SO₄⁻⁻ forms can also be used.

The terms strongly and weakly acidic cation exchange resin and strongly and weakly basic anion exchange resin are well understood in the art and are explained in Ion Exchange Resins, Published by B.D.H. Chemicals Ltd. Poole BH12 4NN England Sixth Edition 1981.

Typical strong acid cation exchange resins have a resin matrix which is phenolic or cross-linked polystyrene e.g. polystyrene cross-linked with divinylbenzene and the functional groups are sulphonic acid (-SO₃H), -OH, or -CH₂SO₃H.

Typical strongly basic anion exchange resins have a resin matrix which is polyacrylic or cross-linked polystyrene e.g. polystyrene cross-linked with divinylbenzene and the functional groups are quaternary ammonium type.

Suitable proportions of cationic to anionic resin in the mixture are from 80:20 to 20:80, preferably 60:40 to 40:60, the basis being by equivalents.

The mixed bed resins used in the present invention can be regenerated by first separating and then employing methods known in the art, for example, as described in Ion Exchange Resins Sixth Edition 1981 BDH Chemicals at page 60.

The invention is illustrated by the following Examples.

### Example 1

A simulated wash water containing bleach-fix was prepared by adding to 900ml of water the following:
15 ml of a 1.56 molar ammonium ferric iron ethylene diamine tetraacetic acid solution,
10.5 g of ammonium thiosulphate,
1.5g of sodium sulphite,
1.0 g of potassium carbonate,
0.5g of triethanolamine,
0.2g of diethyl ethanolamine,
   and 0.2g of 4-Nethyl-N-(betamethane-sulphonamidoethyl)-o-toluidene sesquisulphate.

Water was then added to make the volume up to one litre and the pH adjusted to 6 by the addition of ammonia or sulphuric acid.

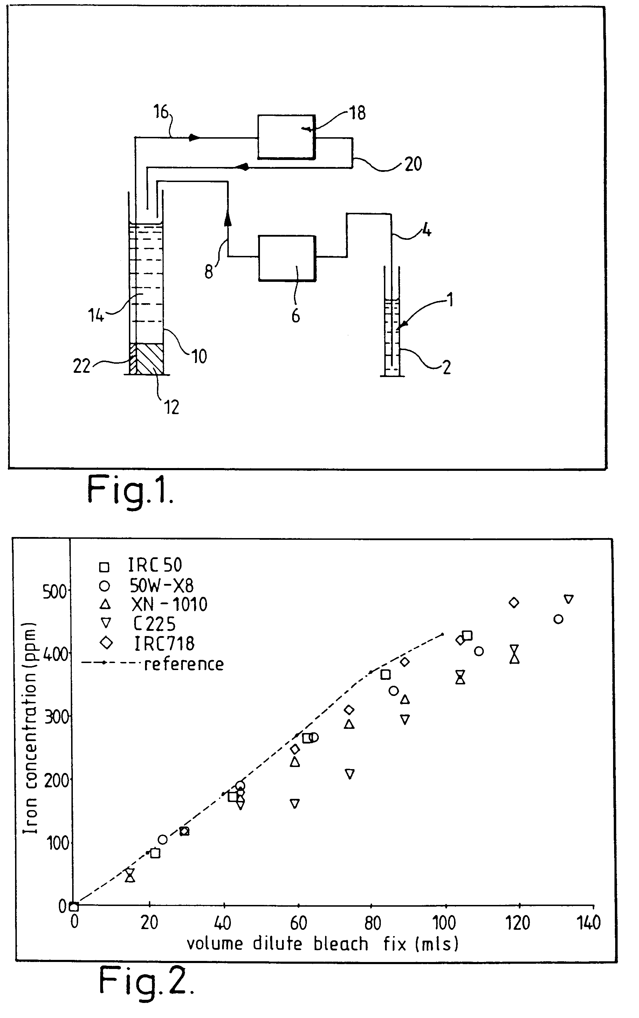

The amount of iron that could be taken up by different ion exchange resins from the simulated wash water containing bleach-fix was measured using the apparatus shown in Fig 1.

Referring to Fig 1, diluted seasoned bleach fix 1 in measuring cylinder 2 was withdrawn by line 4 under the action of pump 6 operating at 4 ml/minute and passed by line 8 to column 10 which contains 100ml of resin 12. Above the resin in column 10 was 500ml of water 14. Water was withdrawn from the base of column 10 by line 16 under the action of pump 18 operating at 200ml/minute and recycled to the column 10 by line 20. Gas bubbler 22 was provided for agitation.

Approximately 20ml samples of liquid coming from the pump 18 before entering the column 10 were taken at approximately 5 minute intervals for analysis. In this way the amount of liquid in the measuring cylinder 2 and recirculation system stayed more or less constant. The samples taken were analysed for iron by Atomic Adsorption Spectroscopy.

Details of the resins used in the 10 runs of Example 1 are set forth in Table 1.

A run was carried out with no resin present to give a reference position.

### Cationic exchange Resins

Performance is recorded in Fig 2 for runs 4,5,6,7 and 8 which shows the build up of iron in the water, as diluted seasoned bleach-fix is pumped in, while the water was pumped through the resin. If any iron was removed from the resin we would expect a delay before iron was detected in the wash water. Initially the cation exchange resins did not work. However when the iron level exceeded 150ppm, the C225 resin began to take up some iron as shown by the kink in the curve for that resin.

Fig 2 shows that a strongly acidic cation exchange resin, for example C 225, is more effective than the weakly acidic cationic resin IRC 50.

### Anionic exchange resins

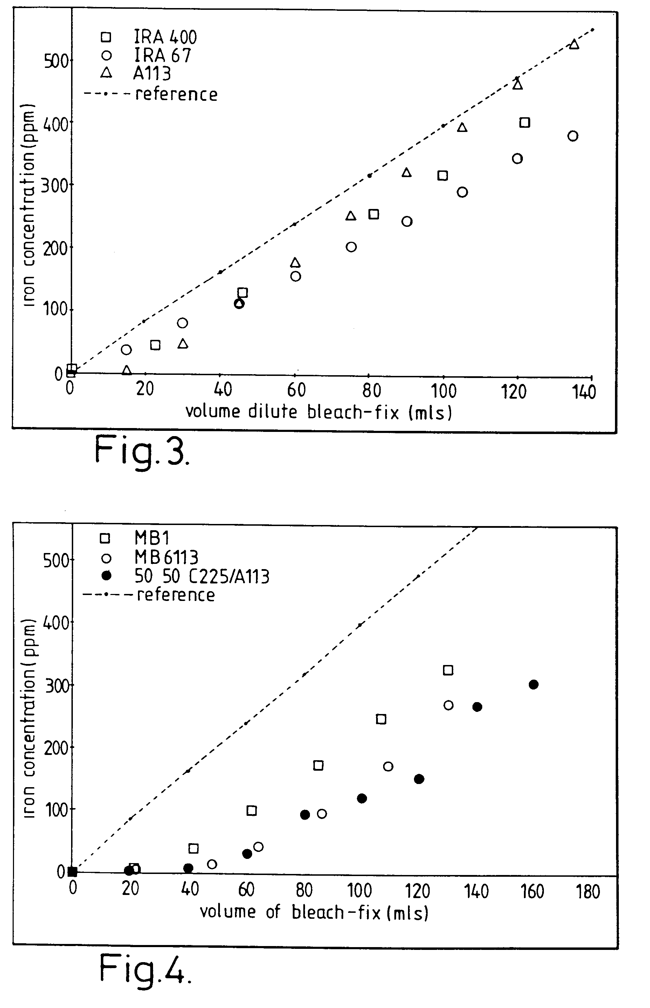

Performance is recorded in Figure 3 for Runs 1,2 and 3. In this case we see a delay in the start of iron being detected in the water. Once detected the iron built up at the same rate as the reference for the strong resins, IRA 400 and A 113, indicating no further take up.

Extrapolating the build curve back to the volume of bleach-fix axis the equivalent amount of bleach-fix iron can be estimated. For the best performing resin, A113, this was equivalent to about 15ml of diluted bleach-fix.

### Mixed Bed Resins

Fig 4 shows the effect of iron build up in the model wash water system, of the mixed bed resins used in runs 9 and 10. The results show that both mixed bed resins are better than the other resins at taking up iron.

The mixed bed resin Amberlite MB1 consists of a mixture of Amberlite IR-120 which is strongly acidic cationic and Amberlite IRA 400 (or 401) which is strongly basic anionic.

The mixed bed resin, Duolite MB6113 is a mixture of the protonated C225 resin i.e. H⁺ form and the hydroxylated A113 resin i.e. OH⁻ form.

The Amberlite MB1 resin had a breakthrough at about 30ml of dilute bleach-fix and the Duolite MB 6113 resin about 40 ml.

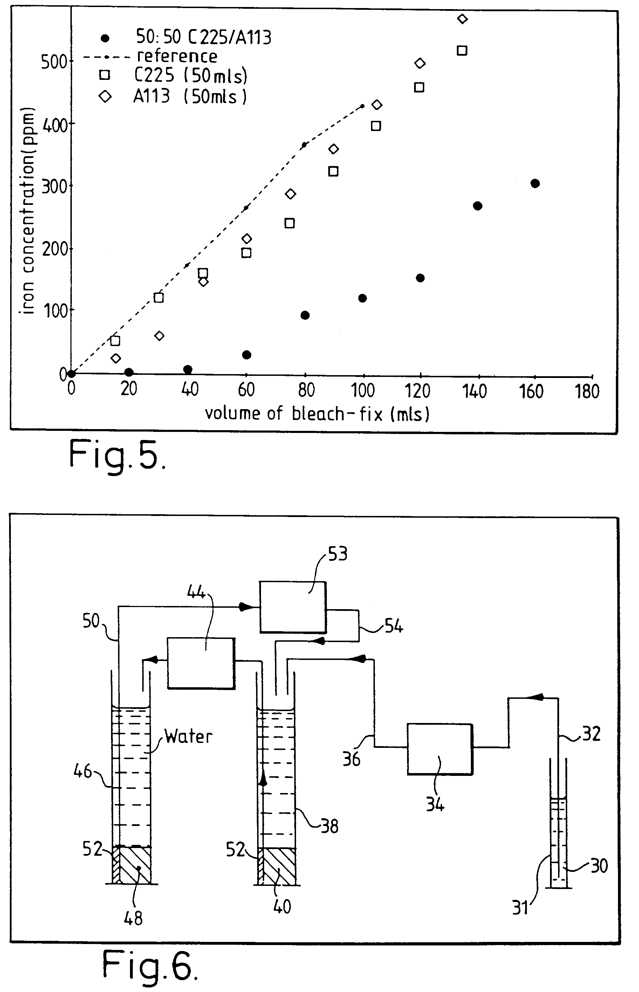

Fig 5 shows that the capacity of 100ml of mixed bed resin is greater than the sum of the two resins tested in separate 50ml columns. This shows that there is some synergy between the two resins.

### Example 2

The apparatus shown in Fig 6 was used to test the two resins C225 and A113 arranged separately one after the other.

Referring to Fig 6, diluted seasoned bleach fix in measuring cylinder 30 was withdrawn by line 32 under the action of pump 34 and passes by line 36 to column 38 containing 50 ml of resin 40. Above the resin in column 38 was 250 ml of water. Water was withdrawn from the base of column 38 by line 42 under the action of one of coupled pumps 44 and 53 (both operating at 200ml/minute) and passed to column 46 also containing 50 ml of resin 48 and above which was also 250 ml of water. Gas bubblers 52 were provided for agitation. Water was withdrawn from the base of column 46 by line 50 under the action of the second of coupled pumps 53 and passed to column 38 by line 54. This part of example 2 is included for comparative purposes only.

### Mixed bed resin

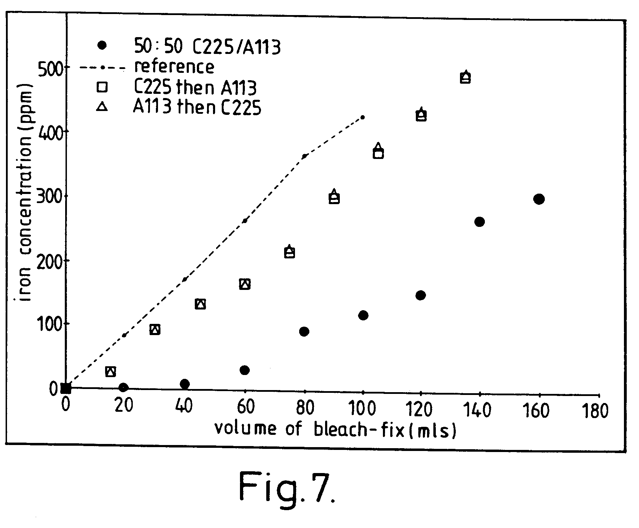

The mixed bed resin 50:50 C225/A113 was tested using the apparatus shown in Fig 1 and the results shown in Fig 7 which compares the take up of iron by the two resins used in separate beds in series with the take up of iron by the two resins mixed together. The results show that 100ml of the mixture of the two resins is superior to 100ml (50 ml plus 50 ml) of the resins used separately, one column following the other. The order of columns is not important.

**Table 1**

| **Run** | **Resin** | **Type** | **Form Supplied** |
|---|---|---|---|
| 1 | Amberlite IRA400 | stongly basic anionic | Cl⁻ |
| 2 | Duolite A113 | strongly basic anionic | Cl⁻ |
| 3 | Amberlite IRA67 | weakly basic anionic | free base |
| 4 | Amberlite IRC50 | weakly acidic cationic | H⁺ |
| 5 | Dowex 50W-X8 | strongly acidic cationic | H⁺ |
| 6 | Dowex XN1010 | strongly acidic cationic macroreticular | H⁺ |
| 7 | Duolite C225 | Strongly acidic cationic | Na⁺ |
| 8 | Amberlite IRC718 | chelating cationic | Na⁺ |
| 9 | Amberlite MB1 | mixed bed strongly acidic and basic | H⁺ and OH⁻ |
| 10 | Duolite MB 6113 | mixed bed strongly acidic and basic | H⁺ and OH⁻ |

Runs 1 to 8 are not according to the invention and are included for comparative purposes only.

"Amberlite", "Duolite" and "Dowex" are Registered Trade Marks of the Rohm and Haas Company, Philadelphia USA, Diamond Shamrock(Polymers) Ltd and the Dow Chemical Company Midland Michigan USA respectively.

## Claims

1. A process for the removal of iron from an aqueous solution from the wash water of a photographic development process which comprises passing the solution through a bed containing a mixture of strongly basic anionic exchange resin and a strongly acidic cationic exchange resin, wherein the iron is present as a complex with a chelating agent.

2. A process as claimed in claim 1 wherein the strongly acidic cationic exchange resin is in the protonated form.

3. A process as claimed in claim 1 wherein the strongly basic anionic exchange resin is in the hydroxylated form.

4. A process as claimed in any one of the preceding claims wherein the proportions of cationic to anionic exhange resin in the mixture are from 60:40 to 40:60, the basis being by equivalents.

5. A process as claimed in any one of the preceding claims wherein the chelating agent is ethylene diamine tetraacetic acid or propylene diamine tetraacetic acid.

## Patentansprüche

1. Verfahren zur Entfernung von Eisen aus einer wäßrigen Lösung von dem Waschwasser eines photographischen Entwicklungsprozesses, bei dem man die Lösung durch ein Bett, enthaltend eine Mischung aus einem stark basischen anionischen Austauscherharz und einem stark sauren kationischen Austauscherharz führt, wobei das Eisen in Form eines Komplexes mit einem ein Chelat bildenden Mittel vorliegt.

2. Verfahren nach Anspruch 1, bei dem das stark saure kationische Austauscherharz in protonisierter Form vorliegt.

3. Verfahren nach Anspruch 1, bei dem das stark basische anionische Austauscherharz in hydroxylierter Form vorliegt.

4. Verfahren nach einem der vorstehenden Ansprüche, bei dem die Verhältnisse von kationischem zu anionischem Austauscherharz in der Mischung bei 60:40 bis 40:60 liegen, wobei die Basis Äquivalente sind.

5. Verfahren nach einem der vorstehenden Ansprüche, bei dem das ein Chelat bildende Mittel Ethylendiamintetraessigsäure oder Propylendiamintetraessigsäure ist.

## Revendications

1. Procédé d'élimination du fer provenant d'une solution aqueuse provenant de l'eau de lavage d'un procédé de développement photographique qui comprend le passage de la solution à travers un lit contenant un mélange d'une résine échangeuse anionique fortement basique et d'une résine échangeuse cationique fortement acide, dans lequel le fer est présent sous la forme d'un complexe avec un agent chélatant.

2. Procédé selon la revendication 1, dans lequel la résine échangeuse cationique fortement acide est sous une forme protonée.

3. Procédé selon la revendication 1, dans lequel la résine échangeuse anionique fortement basique est sous une forme hydroxylée.

4. Procédé selon l'une quelconque des revendications précédentes, dans lequel les proportions de la résine échangeuse cationique à la résine échangeuse anionique du mélange sont comprises entre 60:40 et 40:60, la base étant exprimée en équivalents.

5. Procédé selon l'une quelconque des revendications précédentes, dans lequel l'agent chélatant est l'acide éthylène diamine tétraacétique ou l'acide propylène diamine tétraacétique.
